# EUROPÄISCHE PATENTSCHRIFT

(11) **EP 3 808 160 B1**
(45) Veröffentlichungstag und Bekanntmachung des Hinweises auf die Patenterteilung: **07.01.2026**
(21) Anmeldenummer: 19728062.1
(22) Anmeldetag: 03.06.2019
(51) Int. Cl.: H05H 1/48, H05G 2/00

(54) **VORRICHTUNG ZUM ERZEUGEN EINER FILAMENTIERTEN HILFSENTLADUNG FÜR EINE VORRICHTUNG ZUM ERZEUGEN VON RÖNTGENSTRAHLUNG UND PARTIKELSTRAHLUNG SOWIE FÜR EINEN FUSIONSREAKTOR MIT DER VORRICHTUNG ZUM ERZEUGEN VON RÖNTGENSTRAHLUNG UND PARTIKELSTRAHLUNG UND VERFAHREN ZUM ERZEUGEN VON RÖNTGENSTRAHLUNG UND PARTIKELSTRAHLUNG**
APPARATUS FOR PRODUCING A FILAMENTED AUXILIARY DISCHARGE FOR AN APPARATUS FOR PRODUCING X-RADIATION AND PARTICLE RADIATION AND ALSO FOR A FUSION REACTOR WITH THE APPARATUS FOR PRODUCING X-RADIATION AND PARTICLE RADIATION AND METHOD FOR PRODUCING X-RADIATION AND PARTICLE RADIATION
DISPOSITIF DESTINÉ À PRODUIRE UNE DÉCHARGE AUXILIAIRE À FILAMENTS POUR UN DISPOSITIF DESTINÉ À PRODUIRE DES RAYONS X ET UN RAYONNEMENT DE PARTICULES AINSI QUE POUR UN RÉACTEUR À FUSION POURVU DU DISPOSITIF DESTINÉ À PRODUIRE DES RAYONS X ET UN RAYONNEMENT DE PARTICULES ET PROCÉDÉ DESTINÉ À PRODUIRE DES RAYONS X ET UN RAYONNEMENT DE PARTICULES

(30) Priorität: 14.06.2018 DE 102018114295
(43) Veröffentlichungstag der Anmeldung: 21.04.2021
(73) Patentinhaber: Paul Höss KG, 81541 München (DE)
(72) Erfinder: HÖSS, Paul, 81541 München (DE)
(74) Vertreter: Zimmermann & Partner Patentanwälte mbB
(86) Internationale Anmeldenummer: PCT/EP2019/064368
(87) Internationale Veröffentlichungsnummer: WO 2019/238458

(56) Entgegenhaltungen:
- US-A1- 2004 071 267
- US-A1- 2004 135 103
- US-A1- 2006 273 732
- US-A1- 2007 201 598

## Beschreibung

### Technisches Gebiet

Die vorliegende Anmeldung betrifft eine Vorrichtung zum Erzeugen von Röntgenstrahlung und Partikelstrahlung mittels Kernfusion, einen Fusionsreaktor mit einer Vorrichtung zum Erzeugen von Röntgenstrahlung und Partikelstrahlung und ein Verfahren zum Erzeugen von Röntgenstrahlung und Partikelstrahlung. Insbesondere betrifft die Anmeldung eine Vorrichtung zum Erzeugen von Röntgenstrahlung und Partikelstrahlung mittels Kernfusion mit einer Vorrichtung zum Erzeugen einer definierten, filamentierten Vorentladung, insbesondere einer Glimmentladung, einen Fusionsreaktor mit einer Vorrichtung zum Erzeugen von Röntgenstrahlung und Partikelstrahlung, die eine Vorrichtung zum Erzeugen einer definierten, filamentierten Vorentladung, insbesondere einer Glimmentladung, aufweist, und ein Verfahren zum Erzeugen von Röntgenstrahlung und Partikelstrahlung sowie einer definierten, filamentierten Vorentladung, insbesondere einer Glimmentladung

### Hintergrund der Erfindung

Ohne den Umfang der Erfindung einschränken zu wollen, wird die Erfindung vor dem Hintergrund von Fusionsreaktoren beschrieben. Die Zunahme des Energieverbrauchs und die Nachteile von fossilen Kraftstoffen haben zu einer Suche nach alternativen Energiequellen geführt. Eine solche Energiequelle stellt die Fusionsenergie von thermo-nuklearen Fusionsreaktoren dar, die eine nahezu unbegrenzte Energiequelle darstellt. Jedoch bestehen noch wissenschaftliche und technische Herausforderungen.

Im Allgemeinen weist ein Fusionsreaktor Fusionsbrennstoff, der oft aus einer Mischung aus Deuterium und Tritium besteht bzw. diese aufweist, der auf eine sehr hohe Temperatur geheizt wird und für eine gewisse Zeit in einem Plasmazustand gehalten wird der Plasmazustand wird unter Verwendung von elektrischer Energie erzeugt. Der Plasmazustand enthält Ionen, die ausreichend Energie aufweisen, um zu fusionieren. Um zu fusionieren müssen die Ionen lang genug zusammengehalten werden, so dass Fusion auftreten kann. Dies kann beispielsweise durch magnetischen Einschluss erfolgen. Im Allgemeinen können die Produkte des Fusionsreaktors Elemente, wie beispielsweise Helium, Neutronen und Energie aufweisen. Die in den meisten nuklearen Prozessen freigesetzte Energie ist viel größer als in chemischen Reaktionen, da die Bindungsenergie, die einen Kern zusammenhält, viel größer ist als die Energie, die die Elektronen an einen Kern hält. In den meisten Reaktordesigns wird die von der Reaktion freigesetzte Energie als thermische Energie eingesammelt und anschließend in elektrische Energie umgewandelt.

Es wurden bereits mehrere Fusionsvorrichtungen entwickelt, einschließlich dem Tokamak-Reaktor, z-pinch, sphärischen pinch, Laser, Ionen- oder Elektrodenstrahl und Sphäromak. Allerdings haben diese Reaktoren noch nicht ihr Ziel erreicht. Eine Schwierigkeit besteht darin, dass beim Heizen des Plasmas Instabilitäten auftreten, die die magnetischen Felder davon abhalten, das geheizte, ionisierte Gas für ausreichend lange Zeit einzuschließen, um die Rentabilitätsgrenze für die Energiegewinnung zu überschreiten.

Als mögliche Lösung für die Instabilität wurden die "dense plasma focus" (DPF) (dichter Plasmafokus)-Reaktoren diskutiert. Bei diesen Reaktoren werden natürliche Plasmainstabilitäten genutzt, um einen magnetischen Einschluss in einem dichten Plasmoid zu erzeugen, im Gegensatz zu dem Ansatz in anderen Geräten, die Instabilitäten zu unterdrücken.

Ein solches Verfahren und Vorrichtung ist in US 7,482,607 B2 sowie EP 1 989 714 B1 von Lerner et al. beschrieben. Die in US 7,482,607 B2 sowie EP 1 989 714 B1 beschriebene Vorrichtung weist eine Anode und eine Anzahl von Kathoden auf, die durch einen Isolator voneinander getrennt sind und koaxial zueinander angeordnet sind. Die Anode und die Kathoden sind zumindest teilweise in einer Reaktorkammer angeordnet. Die Anode und die Kathoden sind so angeordnet, dass sie auf ein Plasmoid ein Drehmoment ausüben können. Zum Beispiel können die Kathoden eine spiralartige Verdrehung aufweisen, um auf das Plasmoid ein Drehmoment zu auszuüben. Alternative kann eine spiralartige Spule um die Kathoden herum positioniert sein, um auf das Plasmoid ein Drehmoment auszuüben und ihm ein genau definiertes Trägheitsmoment zu verleihen. Das Drehmoment soll ein dichtes, magnetisch eingeschlossenes Plasmoid in einer gasgefüllten Reaktorkammer erzeugen, das wiederum Röntgenstrahlung und Partikelstrahlung erzeugt.

Jedoch sind die Bedingungen, unter denen das Drehmoment erzeugt wird, in oben genannter Vorrichtung nicht exakt definiert. Damit sind auch die Startbedingungen für den Prozess zur Erzeugung der Röntgenstrahlung und Partikelstrahlung mittels Kernfusion nicht exakt definiert.

Die US 2004/071267 A1 zeigt eine Dichteplasma-Fokusstrahlungsquelle. Die US 2006/273732 A1 zeigt eine Anordnung zur Erzeugung von intensiver kurzwelliger Strahlung auf Basis eines Gasentladungsplasmas. Die US 2004/135103 A1 zeigt einen thermionische Kathode für die Vorionisierung einer extrem ultravioletten Strahlungsquelle.

In Anbetracht des vorherigen besteht Bedarf für eine Vorrichtung und ein Verfahren zum Erzeugen von Röntgenstrahlung und Partikelstrahlung, die/das eine Verbesserung in zumindest manchen der oben aufgezeigten Problemfelder bringt.

### Zusammenfassung der Erfindung

Die vorliegen Erfindung erkennt den Bedarf für eine Vorrichtung zum Erzeugen einer definierten, insbesondere filamentierten, Vorentladung oder Hilfsentladung für einen Fusionsreaktor, insbesondere für eine Vorrichtung und ein Verfahren zum Erzeugen von Röntgenstrahlung und Partikelstrahlung mittels Kernfusion. Die Vorrichtung zum Erzeugen einer definierten, insbesondere filamentierten, Vorentladung kann insbesondere dazu geeignet sein, definierte Startbedingungen zu erzeugen, beispielsweise für ein Trägheitsmoment.

Die Erfindung wird durch den Gegenstand der unabhängigen Ansprüche angegeben. Besonders vorteilhafte Ausführungsformen werden in den abhängigen Ansprüchen angegeben.

### Kurze Beschreibung der Figuren

Im weiteren soll die Erfindung anhand von in Figuren dargestellten Ausführungsbeispielen erläutert werden, aus denen sich weitere Vorteilteile und Abwandlungen ergeben. Dazu zeigen:
- Fig. 1A: eine schematische Seitenansicht einer Vorrichtung gemäß Ausführungsformen;
- Fig. 1B: eine schematische Seitenansicht einer Vorrichtung gemäß Ausführungsformen;
- Fig. 2: eine schematische Seitenansicht einer Vorrichtung gemäß Ausführungsformen;
- Fig. 3A: eine schematische Draufsicht einer Vorrichtung gemäß Ausführungsformen;
- Fig. 3B: eine schematische Draufsicht einer Vorrichtung gemäß Ausführungsformen;
- Fig. 4: eine schematische Seitenansicht einer Vorrichtung gemäß Ausführungsformen;
- Fig. 5: eine schematische Seitenansicht einer Vorrichtung gemäß Ausführungsformen;
und
- Fig. 6: ein Flussdiagramm eines Verfahrens gemäß Ausführungsformen.

### Detaillierte Beschreibung der Figuren

Während im Folgenden die Erfindung anhand von detaillierten Ausführungsformen beschrieben wird, soll anerkannt werden, dass der vorliegende Erfindung ein allgemeines erfinderisches Konzept zugrunde liegt, das auf eine breite Auswahl von spezifischen Zusammenhängen angewendet werden kann. Die hierein verwendeten Terminologie und hierin beschriebenen Ausführungsformen zeigen nur beispielhaft und erklärend spezielle Umsetzungen der Erfindung auf, ohne sie jedoch dadurch zu beschränken. Beispielsweise können Merkmale, die als Teil einer Ausführungsform beschrieben oder dargestellt sind, auch in Verbindung mit einer anderen Ausführungsform verwendet werden, um eine weitere Ausführungsform zu ergeben. Es ist beabsichtigt, dass die vorliegende Offenbarung solche Modifizierungen und Weiterbildungen umfasst.

In der folgenden Beschreibung der Zeichnungen bezeichnen die gleichen oder ähnlichen Bezugszeichen die gleichen oder ähnlichen Komponenten. Im Allgemeinen werden nur die Unterschiede zu einer Ausführungsform beschrieben. Soweit es nicht explizit anderweitig angegeben ist, trifft die Beschreibung eines Teils oder Aspekt einer Ausführungsform auf ein entsprechendes Teil oder Aspekt einer anderen Ausführungsform ebenso zu.

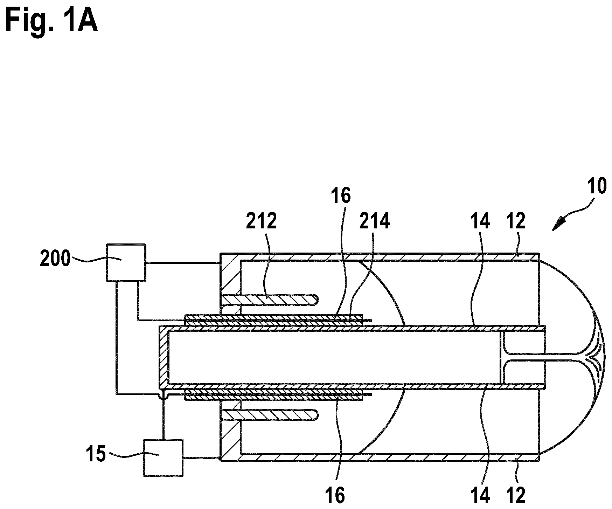

Die Fig. 1A zeigt eine Vorrichtung 10 zum Erzeugen von Röntgenstrahlung und Partikelstrahlung mittels Kernfusion. Die Vorrichtung 10 kann beispielsweise eine Plasmafokusvorrichtung 10 sein.

Die Vorrichtung 10 kann eine erste Hauptelektrode 14 und/oder eine zweite Hauptelektrode 12 aufweisen. Die erste Hauptelektrode 14 kann eine Anode 14 sein und/oder die zweite Hauptelektrode 12 kann eine Kathode 12 sein. Alternative kann die erste Hauptelektrode 14 eine Kathode 14 sein und/oder die zweite Hauptelektrode 12 kann eine Anode 12 sein. Die Wahl des Vorzeichens der Spannung zwischen der ersten Hauptelektrode 14 und der zweiten Hauptelektrode 12 kann spezifische Vorteile mit sich bringen. Beispielsweise kann die zweite Hauptelektrode 12 eine größere Oberfläche bieten und so Wärme besser abführen. Im Folgenden wird die ersten Hauptelektrode 14 als Anode und die zweite Hauptelektrode 12 als Kathode 12 bezeichnet. Das ist jedoch nur beispielhaft und sollte nicht beschränkend gelesen werden. So umfasst die vorliegende Anmeldung auch die Ausführungsformen, die von hierin beschriebenen Ausführungsformen dahingehend abweichen, dass die ersten Hauptelektrode 14 die Kathode und die zweite Hauptelektrode 12 die Anode 12 ist.

Die erste Hauptelektrode 14 und die zweite Hauptelektrode 12 können durch einen Isolator 16 voneinander getrennt sein. Die erste Hauptelektrode 14 und die zweite Hauptelektrode 12 können koaxial zueinander angeordnet sein. Die erste Hauptelektrode 14 und die zweite Hauptelektrode 12 können zumindest teilweise in einer Reaktorkammer (nicht gezeigt) angeordnet sein.

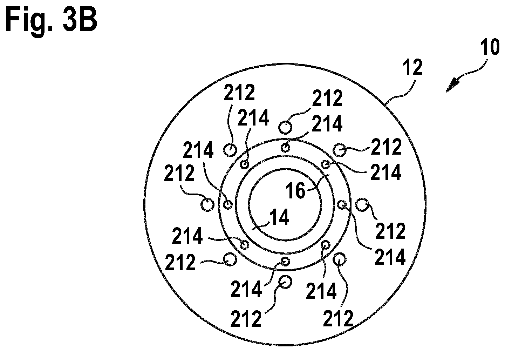

Die Kathode 12 kann alternativ als Hohlzylinder ausgeführt sein (siehe Fig. 3B), da insbesondere die Filamentierung der Entladung durch die Hilfselektroden erfolgen kann.

Die erste Hauptelektrode 14 kann eine Anode 14 sein und/oder die zweite Hauptelektrode 12 kann eine Kathode 12 sein. Alternative kann die erste Hauptelektrode 14 eine Kathode 14 sein und/oder die zweite Hauptelektrode 12 kann eine Anode 12 sein.

Gemäß hierein beschriebener Ausführungsformen kann die zweite Hauptelektrode 12 als Hohlzylinder ausgebildet sein. Insbesondere kann die zweite Hauptelektrode 12 ein nichtmagnetisches oder nur schwach magnetisches Material aufweisen. Alternativ oder zusätzlich, kann die zweite Hauptelektrode 12 eine Mehrzahl von zweiten Hauptelektroden-Elektroden 12 aufweisen.

Die Vorrichtung 10 kann eine Vorentladungseinrichtung oder Hilfsentladungseinrichtung zum Erzeugen einer filamentierten Vorentladung oder Hilfsentladung aufweisen. Die filamentierte Vorentladung kann eine niederohmige, insbesondere filamentierte, Überbrückung über den Isolator 16 ausbilden. Insbesondere kann die Vorentladung eine kontrollierte leitfähige Verbindung über den Isolator erzeugen, der zur Ausbildung von Filamenten führt. Für die Dauer der Vorentladung kann also ein Strom parallel zum Isolator fließen, insbesondere an definierten Punkten, zwischen denen sich Filamente ausbilden können. Die Filamente können sich insbesondere zwischen jeweils zwei gepaarten Punkten ausbilden. Die Vorrichtung 10 kann ferner eine Vorentladungsquelle 200 oder Hilfsentladungsquelle 200, insbesondere mit hohem Innenwiderstand, aufweisen. Die Vorentladungsquelle 200 kann mit der Vorentladungseinrichtung verbunden sein.

Die Vorentladung kann auf unterschiedliche Weise erzeugt werden. Beispielsweise kann die Vorentladung eine Glimmentladung, eine dielektrische Barriereentladung, ein Mikrowellenplasma und/oder ein HF (Hochfrequenz)-Plasma sein. Eine Glimmentladung kann beispielswiese mit einer Glimmentladungseinrichtung wie hierin beschrieben erzeugt werden. Eine Glimmentladung kann insbesondere bei geringem Aufwand und auf einfache Art erzeugt werden. Beispielsweise kann eine Glimmentladung mit weniger als 100 W und 2 kV erzeugt werden.

Eine dielektrische Barriereentladung kann beispielsweise mit einer dielektrischen Barriereentladungseinrichtung erzeugt werden, bei der eine Wechselspannung zwischen zumindest zwei Elektroden angelegt wird. Bei einer dielektrischen Barriereentladung kann eine Hilfselektrode in dem Isolator 16 so angeordnet sein, dass die Hilfselektrode 16 von dem Isolator 16 verschlossen wird. Im Falle einer dielektrischen Barriereentladung legt eine dielektrische Barriereentladungsquelle eine Wechselspannung an die so isolierte Hilfselektrode an, wohingegen bei der Glimmentladunsquelle eine Gleichspannung anliegt. Durch so erzeugte Verschiebungsströme kann die dielektrische Barriereentladung durch den Isolator 16 hindurch erzeugt werden und/oder es kann elektrische Leistung in das Plasma übertragen werden.

Eine Mikrowellenplasma kann beispielsweise mit einer Mikrowellenplasmaeinrichtung erzeugt werden, das mit einer Mikrowellenplasmaquelle verbunden ist. Dazu kann beispielsweise ein Hohlleiter und/oder ein λ/4-Resonator verwendet werden.

Ein HF-Plasma kann beispielsweise mit einer HF-Plasmaeinrichtung erzeugt werden, das mit einer HF-Plasmaquelle verbunden ist. Ein HF-Plasma kann typischerweise mit einer Frequenz von 13,56 Mhz erzeugt werden. Hierbei ist sowohl eine kapazitive als auch eine induktive Einkopplung der Leistung möglich.

Die genannten Beispiele können ein Plasma hervorbringen, das eine niedrige Energie und/oder eine hohe Leitfähigkeit aufweist. Solch ein Plasma kann insbesondere für die hierein beschriebene Vorentladung eventuell von Vorteil sein.

Obwohl im Folgenden die Offenbarung im Zusammenhang mit einer Glimmentladung beispielhaft ausgeführt wird, gelten die allgemeinen Grundsätze auch für andere Arten von Vorentladung und die Offenbarung soll nicht auf das Beispiel der Glimmentladung beschränkt sein, gleichwohl mit der Glimmentladung besondere Vorteile einhergehen. So wird im Folgenden die "Vorentladung" auch "Glimmentladung" genannt, und damit auch die "Vorentladungseinrichtung" "Glimmentladungseinrichtung" und die "Vorentladungsquelle" "Glimmentladungsquelle". Die Begriffe können jedoch soweit als analog erachtet werden, soweit sie keine spezifische Beschränkung auf die Glimmentladung mit sich führen.

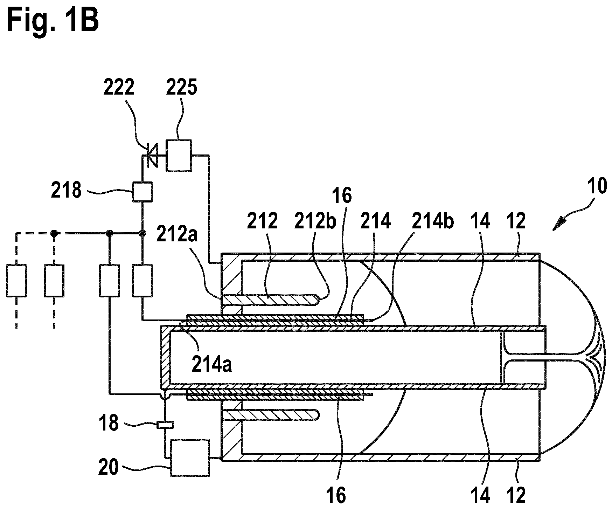

Wie in der Fig. 1B gezeigt, weist die Vorentladungseinrichtung oder Glimmentladungseinrichtung eine erste Hilfselektrode 214 und eine zweite Hilfselektrode 212 auf. Die erste Hilfselektrode 214 und die zweite Hilfselektrode 212 sind durch den Isolator 16 voneinander getrennt. Die erste Hilfselektrode 214 und die zweite Hilfselektrode 212 können konzentrisch achsparallel zueinander um die Anode 14 angeordnet sein. Die erste Hilfselektrode 214 und die zweite Hilfselektrode 212 sind zumindest teilweise in der Reaktorkammer angeordnet sein. Die erste Hilfselektrode 214 weist eine Mehrzahl von ersten Hilfselektroden 214 auf. Die zweite Hilfselektrode 212 weist eine Mehrzahl von zweiten Hilfselektroden 212 auf. Der Mehrzahl von zweiten Hilfselektrode-Elektroden 212 und die Mehrzahl von ersten Hilfselektrode -Elektroden 214 können koaxial angeordnet sein. Ferner kann eine zweiten Hilfselektrode-Elektrode 212 der Mehrzahl von zweiten Hilfselektrode-Elektroden 212 mit einer entsprechenden ersten Hilfselektrode-Elektrode 214 der Mehrzahl von ersten Hilfselektrode-Elektroden 214 achsparallel angeordnet sein. Die ersten Hilfselektrode-Elektroden 214 und die zweiten Hilfselektrode-Elektroden 212 können konfiguriert sein, um eine Glimmentladung zwischen den ersten Hilfselektrode-Elektroden 214 und den zweiten Hilfselektrode-Elektroden 212 auszubilden.

Gemäß hierein beschriebener Ausführungsformen kann eine Anzahl der Mehrzahl von Kathoden-Elektroden 12 einer Anzahl der Mehrzahl von ersten Hilfselektroden 214 und/der einer Anzahl der Mehrzahl von zweiten Hilfselektroden 212 entsprechen.

Gemäß hierein beschriebener Ausführungsformen kann die erste Hilfselektrode 214 eine Hilfsanode 214 sein und/oder die zweite Hilfselektrode 212 kann eine Hilfskathode 212 sein (wie in Fig. 1B gezeigt). Alternativ kann die erste Hilfselektrode 214 eine Hilfskathode 214 sein und/oder die zweite Hilfselektrode 212 kann eine Hilfsanode 212 sein.

Die Vorrichtung 10 enthält ein Gas in der Reaktorkammer.

Die Vorrichtung 10 weist eine elektrische Vorentladungsquelle 200 auf, insbesondere eine Glimmentladungsquelle 200. Die elektrische Glimmentladungsquelle kann einen hohen Innenwiderstand aufweisen. Die elektrische Glimmentladungsquelle kann mit der Hilfsanode 214 und der Hilfskathode 212 elektrisch verbunden sein. Eine Glimmentladung kann zwischen der Hilfsanode 214 und der Hilfskathode 212 als Ergebnis einer elektrischen Vorentladung der elektrischen Glimmentladungsquelle erzeugt werden.

Die Vorrichtung 10 weist eine elektrische Entladungsquelle 15 auf. Die elektrische Entladungsquelle 15 ist mit der Anode 14 und der Kathode 12 elektrisch verbunden. Ein dichtes, magnetisch eingeschlossenes Plasmoid wird vor der Anode 14 als Ergebnis einer elektrischen Entladung von der elektrischen Entladungsquelle 15 erzeugt und ein oder mehrere Ionenstrahlen, ein oder mehrere Röntgenstrahlen oder Kombinationen werden daraus emittiert.

Insbesondere kann die Vorrichtung 10 eine Plasmafokusvorrichtung 10 enthalten, wie sie in US 7,482,607 B2 sowie EP 1 989 714 B1 von Lerner et al. beschrieben wird, die jedoch um eine Vorrichtung zum Erzeugen einer definierten Glimmentladung erweitert ist. Die Vorrichtung zum Erzeugen einer definierten Glimmentladung kann die erste Hilfselektrode 214, die zweite Hilfselektrode 212 und/oder die elektrische Vorentladungsquelle 200 aufweisen.

Die Glimmentladung kann als eine ruhende Glimmentladung erzeugt werden. Im Zusammenhang der vorliegenden Offenbarung kann eine "ruhende Glimmentladung" als eine Glimmentladung verstanden werden, deren Trägheitsmoment (exakt) gleich Null ist. Ferner kann dadurch zu Beginn der Hochstromhauptentladung durch die elektrische Entladungsquelle schon eine stark ionisierte Vorentladung vorhanden sein. Dadurch kann verhindert werden, dass hochenergetische Runaway Elektronen, die ohne Glimmentladung erzeugt würden, die Anode erodieren und dadurch Verunreinigungen mit daraus folgender starker Strahlungskühlung in das Plasma einbringen. In der Praxis können Ausführungsformen das Plasmoid stabilisieren.

Die Glimmentladung kann derart ausgeführt sein, dass sie eine Mehrzahl von Einzelentladungen aufweist und/oder aus diesen besteht. Die Mehrzahl von Einzelentladungen können parallel zueinander geschaltet sein. Die Anzahl der Mehrzahl von Einzelentladungen kann identisch mit der Anzahl der Mehrzahl von Hilfskathoden-Elektroden 12 sein. Einige Piko- bis Millisekunden später kann sich die Hauptentladung ausbilden. Die parallelgeschalteten einzelnen Glimmentladungen können die Gesamtinduktivität umgekehrt proportional zu ihrer Anzahl reduzieren und können somit einen schnelleren Anstieg des Haupt-Entladungsstroms ermöglichen.

Wie in der Fig. 1B gezeigt kann die Vorrichtung 10 ein ineinander verschachteltes Elektrodendesign aufweisen. Insbesondere kann die Kathode 12 um die Anode 14 herum angeordnet sein. Ferner kann die erste Hilfselektrode 214 um die Anode 14 herum angeordnet sein. Die zweite Hilfselektrode 212 kann um die erste Hilfselektrode 214 herum angeordnet sein. Die Kathode 14 kann um die zweite Hilfselektrode 212 herum angeordnet sein. Insbesondere kann die Anode 14, die Kathode 12, die erste Hilfselektrode 214 und/oder die zweite Hilfselektrode 212 koaxial und/oder konzentrisch achsparallel zueinander angeordnet sein.

Die Kathode 12 kann beispielsweise die Mehrzahl von Kathoden-Elektroden 12 aufweisen oder als Hohlzylinder ausgebildet sein. Die Kathoden-Elektroden 12 können gleichmäßig verteilte Stäbe sein. Die Anode 14 kann als hohler Zylinder ausgebildet sein. Der Isolator 16 kann die Anode 14, insbesondere eine Basis der Anode 14, umgeben. Beispielsweise kann die Vorrichtung 10 ineinander verschachtelte Berylliumelektroden aufweisen. Die Kathode 12, die Anode 14, die zweite Hilfselektrode 212 und/oder die erste Hilfselektrode 214 können in der Reaktorkammer, die eine Vakuumkammer sein kann, mit einem Gas (z.B. Diboran) unter niedrigem Druck, das einen Raum zwischen ihnen ausfüllt, eingeschlossen sein, um insbesondere den Brennstoff für die Reaktion zu liefern.

Die Anode 14 kann mit der Kathode 12 durch eine oder mehrere Kondensatorbänke 18 und einen oder mehrere Schalter 20 verbunden sein. Die eine oder mehrere Kondensatorbänke 18 und der eine oder mehrere Schalter 20 können die elektrische Entladungsquelle 15 bilden und/oder Teil dieser sein. Die erste Hilfselektrode 214 kann mit der zweiten Hilfselektrode 212 durch eine oder mehrere Hilfskondensatorbänke 218 oder Gleichstromquellen 218 und einen oder mehrere Hilfsschalter 220 verbunden sein. Der Hilfsschalter 220 kann ein Kleinleistungsschalter sein. Die eine oder mehrere Hilfskondensatorbänke 218 und der eine oder mehrere Hilfsschalter 220 können die elektrische Vorentladungsquelle 200 oder Glimmentladungsquelle 200 bilden und/oder Teil dieser sein. Die elektrische Vorentladungsquelle 200 oder Glimmentladungsquelle 200 kann eventuell auch induktiv mittels Zündtrafo realisiert sein.

Gemäß hierein beschriebener Ausführungsformen kann die elektrische Glimmentladungsquelle konfiguriert sein, um eine elektrische Vorentladung von gleich oder größer als 0,5 kV, insbesondere gleich oder größer als 1 kV, vorzugsweise gleich oder größer als 2 kV zu erzeugen. Insbesondere kann die Spannung der elektrischen Vorentladung von einem Druck in der Reaktorkammer abhängen. Ist der Druck in der Reaktorkammer vergleichsweise hoch, so kann die elektrische Vorentladung vergleichsweise groß sein, und/oder umgekehrt. Die elektrische Glimmentladungsquelle kann einen oder mehrere Innenwiderstände oder Vorwiderstände aufweisen. Insbesondere kann die elektrische Glimmentladungsquelle eine Mehrzahl von Vorwiderständen aufweisen. Eine Anzahl der Mehrzahl von Vorwiderständen kann der Anzahl der Mehrzahl der ersten Hilfselektrode-Elektroden 214 entsprechen. Die Vorwiderstände können mit einer gemeinsamen Spannungsquelle verbunden sein. Die Spannungsquelle kann einen Strom von einigen mA, insbesondere von größer oder gleich 0,8 mA und/oder kleiner oder gleich 3 mA, pro Vorwiderstand und/oder pro ersten Hilfselektrode-Elektrode 214 liefern. Die Vorwiderstände können beispielsweise je einen Widerstand von 500 kOhm oder größer aufweisen. Die Glimmentladung kann einige Millisekunden bis Sekunden vor der Hauptentladung gezündet werden.

Die elektrische Glimmentladungsquelle kann ferner eine Diode 222 aufweisen. Die Diode 222 kann zwischen dem einen oder mehreren Schalter 220 und der einen oder mehreren Hilfskondensatorbänken 218 oder Gleichstromquellen angeordnet sein. Insbesondere kann nur ein Schalter 220 vorgesehen sein, um die eine oder mehreren Hilfskondensatorbänke 218 zu schalten. Ferner kann auch kein Schalter 220 vorgesehen sein, und die Diode 222 die Schalterfunktion übernehmen. Gemäß einer Ausführungsform kann eine Kondensatorbank, wie die eine oder mehreren Hilfskondensatorbänke 218, eine Gleichstromquelle sein. Die Diode 222 kann eine Hochspannungsdiode niedriger Leistung sein. Die Diode 222 kann entsprechende angeordnet werden, je nachdem welche Hilfselektrode 212, 214 als Hilfsanode bzw. Hilfskathode konfiguriert ist. So können Ausführungsformen klein, kompakt und kostengünstig in der Praxis umgesetzt werden.

Gemäß hierein beschriebener Ausführungsformen kann die elektrische Glimmentladungsquelle konfiguriert sein, um die Glimmentladung zwischen der ersten Hilfselektrode 214 und der zweiten Hilfselektrode 212 zu erzeugen. Insbesondere kann die elektrische Glimmentladungsquelle konfiguriert sein, um die Glimmentladung nur zwischen der ersten Hilfselektrode 214 und der zweiten Hilfselektrode 212 zu erzeugen.

Gemäß hierein beschriebener Ausführungsformen kann die Kathode 12 eine leitfähige Scheibe aufweisen. Die Mehrzahl von Kathoden-Elektroden 12 kann auf der Scheibe befestigt sein. Insbesondere kann die leitfähige Scheibe sich zur Anode 14 hin erstrecken. Beispielsweise kann die leitfähige Scheibe eine Ausnehmung aufweisen, in der die Anode 14 und/oder der Isolator 16 angeordnet sind. Insbesondere kann der Isolator 16 zwischen der leitfähigen Scheibe der Kathode 12 und der Anode 14 angeordnet sein.

Gemäß hierin beschriebener Ausführungsformen können die Kathode 12 und die Hilfskathode (also die Hilfselektrode 212, 214, die als Hilfskathode konfiguriert ist) miteinander elektrisch verbunden sein. Beispielsweise können die Hilfskathoden-Elektroden (also die Hilfselektrode-Elektroden 212, 214, die als Hilfskathode-Elektroden konfiguriert sind) auf und/oder in der Kathode 12 befestigt sein. Insbesondere kann die Mehrzahl von Hilfskathoden-Elektroden gleichmäßig verteilte Stäbe sein, die in der Kathode 12 befestigt sind. Sind die Kathode 12 und die Hilfskathode miteinander elektrisch verbunden, kann die elektrische Glimmentladungsquelle mit der Kathode 12 verbunden sein.

Die zweiten Hilfselektrode-Elektroden 212 können je ein erstes Ende 212a und ein zweites Ende 212b aufweisen. Das erste Ende 212a kann mit der elektrischen Vorentladungsquelle, einem Massenpotential und/oder der Kathode 12 verbunden sein. Das zweite Ende 212b kann vom ersten Ende 212a abgewandt sein. Die ersten Hilfselektrode-Elektroden 214 können je ein erstes Ende 214a und ein zweites Ende 214b aufweisen. Das erste Ende 214a kann mit der elektrischen Vorentladungsquelle verbunden sein. Das zweite Ende 214b kann vom ersten Ende 214a abgewandt sein.

Gemäß hierein beschriebener Ausführungsformen kann ein Abstand zwischen dem zweiten Ende 214b der ersten Hilfselektrode-Elektroden 214 und dem zweiten Ende 212b der zweiten Hilfselektrode-Elektroden 212 kann kleiner als ein Abstand zwischen dem zweiten Ende 214b der ersten Hilfselektrode-Elektroden 214 und der Kathode 12, insbesondere einem nächsten Punkt der Kathode 12, sein. Dadurch kann gewährleistet werden, dass die Glimmentladung sich zwischen der ersten Hilfselektrode 214 und der zweiten Hilfselektrode 212 ausbildet und insbesondere nicht zwischen der ersten Hilfselektrode 214 und der Kathode 12.

Das zweite Ende 214 der ersten Hilfselektrode-Elektroden 214 und das zweite Ende 212b der zweiten Hilfselektrode-Elektroden 212 können parallel konzentrisch entlang einer Achse der Anode 14 eine unterschiedliche Höhe aufwiesen. Beispielsweise kann das zweite Ende 214 der ersten Hilfselektrode-Elektroden 214 weiter von der leitfähigen Scheibe der Kathode 12 entfernt sein als das zweite Ende 212b der zweiten Hilfselektrode-Elektroden 212. Durch diese hängende Anordnung kann eine heiße, leichter ionisierbare Gassäule erzeugt werden.

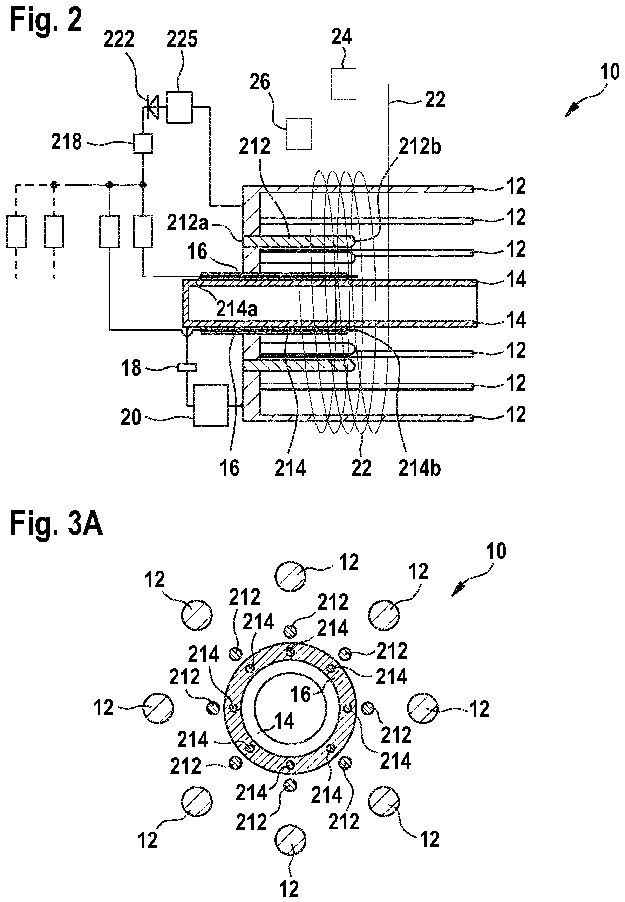

Wie in der Fig. 2 gezeigt kann die Vorrichtung 10 eine Spule 22 aufweisen. Die Spule 22 kann eine spiralartige Spule 22 sein. Die Spule 22 kann um die Anode 14, die Kathode 12, die erste Hilfselektrode 212 und/oder die zweite Hilfselektrode 214 angeordnet sein. Die Spule 22 kann ein magnetisches Feld erzeugen, dass dem Plasmoid ein Drehmoment und somit ein Trägheitsmoment verleihen kann. Die Spule 22 kann mit einem Schalter 26 verbunden sein. Ferner kann eine Spannungsquelle 24 vorgesehen sein. Die Spannungsquelle 24 kann von der Spannungsquelle der elektrischen Glimmentladungsquelle und/oder der elektrischen Entladungsquelle getrennt sein. Dadurch kann die Spule unabhängig von der elektrischen Glimmentladungsquelle und/oder der elektrischen Entladungsquelle betrieben werden. Alternativ kann auch eine gemeinsame Spannungsquelle verwendet werden. Eine Position der Spule 22 sowie ihre Anzahl an Windungen kann von der spezifischen Anwendung abhängen.

Die Fig. 3A zeigt in einer Draufsicht eine Anordnung der Anode 14, der Kathode 12, der ersten Hilfselektrode 214, der zweiten Hilfselektrode 212 und des Isolators 16.

Die Fig. 3B zeigt in einer Draufsicht eine Anordnung der Anode 14, der Kathode 12, der ersten Hilfselektrode 214, der zweiten Hilfselektrode 212 und des Isolators 16. Hierbei ist die Kathode 12 als Hohlzylinder ausgeführt.

Gemäß hierin beschriebener Ausführungsformen können die ersten Hilfselektrode-Elektroden 214 in dem Isolator 16 verlaufen. Gemäß hierin beschriebener Ausführungsformen kann der Isolator 16 die ersten Hilfselektrode-Elektroden 214 also zumindest teilweise umschließen. Insbesondere können die zweiten Hilfselektrode-Elektroden 214 als dünne Leiter ausgebildet werden, die in dem Isolator 16 verlaufen. Ferner können die zweiten Hilfselektrode-Elektroden 214 achsparallel symmetrisch in dem Isolator 16 verlaufen. Die zweiten Enden 214b oder anodenseitigen Enden der ersten Hilfselektrode-Elektroden 214 können aus dem Isolator 16 hervortreten. Die zweiten Enden 214b der ersten Hilfselektrode-Elektroden 214 könne also vom dem Isolator 16 hervorstehen.

Die zweiten Hilfselektroden 212 können als vorspringende Stifte der leitfähigen Scheibe der Kathode 12 ausgebildet sein. Durch geeignete Materialauswahl der zweiten Hilfselektrode 212 kann die Stabilität der Glimmentladung optimiert werden.

Wie in der Figs. 3A und 3B gezeigt, kann je eine erste Hilfselektrode-Elektrode 214, eine zweite Hilfselektrode-Elektrode 212 und/oder eine Kathoden-Elektrode 12 auf einer radialen Line ausgehend von einem Mittelpunkt der Anode 14 angeordnet sein. Insbesondere kann entlang der radialen Linie ein Abstand zwischen der ersten Hilfselektrode-Elektrode 214 und der zweiten Hilfselektrode-Elektrode 212 kleiner als ein Abstand zwischen der ersten Hilfselektrode-Elektrode 214 und der Kathoden-Elektrode 12 sein. Die Anzahl der ersten Hilfselektrode-Elektrode 214, der zweiten Hilfselektrode-Elektrode 212 und/oder der Kathoden-Elektroden 12 können einander entsprechen.

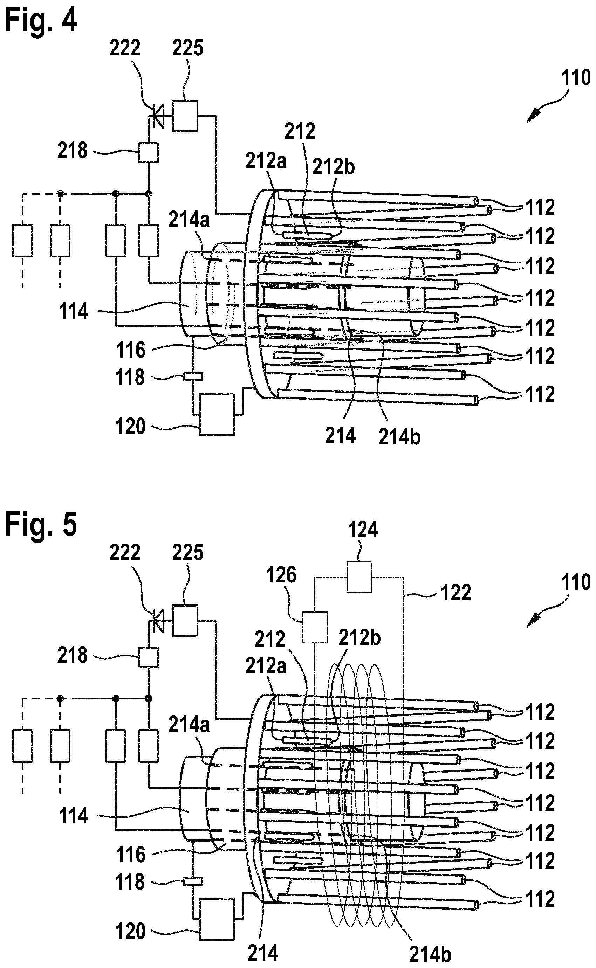

Wie in der Fig. 4 gezeigt kann die Kathode 12, insbesondere die Mehrzahl von Kathoden-Elektroden 12, geneigt oder gekippt sein. Das Maß der Neigung kann von der beabsichtigten Anwendung abhängen. Beispielsweise kann die die Kathode 12, insbesondere die Mehrzahl von Kathoden-Elektroden 12, um gleich oder mehr als 0,05 Grad und/oder gleich oder weniger als 10 Grad, beispielsweise 0,3 Grad geneigt sein. Die Neigung kann tangential zur Achse der Anode 12 sein. Durch die Neigung der Kathode 12 kann auf das Plasmoid ein Drehmoment ausgeübt werden, dass in der Folge ein definiertes Trägheitsmoment erzeugt.

Ferner kann das erste Ende 212a der zweiten Hilfselektrode 212, insbesondere die ersten Enden 212a von Mehrzahl der zweiten Hilfselektrode-Elektroden 212, mit dem erste Ende 214a der ersten Hilfselektrode 214, insbesondere den ersten Enden 214a der Mehrzahl von ersten Hilfselektrode-Elektroden 214, ausgerichtet sein. Dies kann insbesondere dann von Vorteil sein, wenn die Kathode 12, insbesondere die Mehrzahl von Kathoden-Elektroden 12, geneigt oder gekippt ist.

Die Fig. 5 zeigt beispielhaft die Vorrichtung 10 mit der geneigten Kathode 12 und der Spule 22. Diese Kombination bietet den Vorteil, ein variables Drehmoment auf das Plasmoid einwirken zu lassen. Die Spule 22 kann also konfiguriert sein, um dem Plasmoid ein variables Drehmoment zu verleihen, insbesondere um in dem Plasmoid ein variables Trägheitsmoment am Ende der Beschleunigung zu verleihen.

Hierin beschriebene Ausführungsformen stellen einen Fusionsreaktor bereit. Der Fusionsreaktor kann mindestens eine Vorrichtung 10 zum Erzeugen von Röntgenstrahlung und Partikelstrahlung aufweisen. Der Fusionsreaktor kann mindestens eine Energierückgewinnungseinrichtung aufweisen, die in der Röntgenstrahlung und/oder der Partikelstrahlung enthaltenen Energie zurückgewinnen kann. Die Energierückgewinnungseinrichtung kann insbesondere die in der Röntgenstrahlung und/oder der Partikelstrahlung enthaltenen Energie in elektrische Energie umwandeln. Die in der Röntgenstrahlung enthaltene Energie kann beispielsweise unter Ausnutzung des photoelektrischen Effekts in elektrische Energie umgewandelt werden. Ferner kann unter Verwendung eines Transformators die in dem Partikelstrahl enthaltene Energie umgewandelt werden, siehe hierzu zB Lerner et al, Fig. 11. Der Partikelstrahl kann ein gepulster Strom sein, der also eine Primärwicklung des Transformators darstellen kann

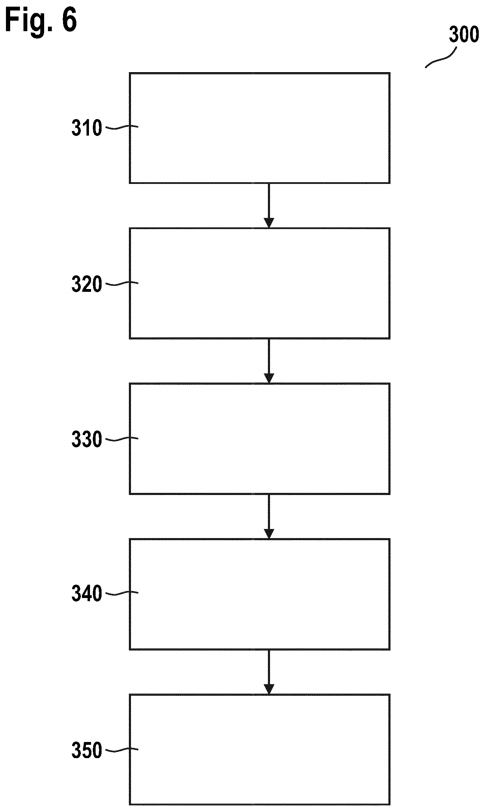

Die Fig. 6 zeigt ein Verfahren 300 zum Erzeugen von Röntgenstrahlung und Partikelstrahlung. Das Verfahren kann einen oder mehrere der Blöcke 310 bis 360 aufweisen. Gemäß Block 310 kann eine filamentierte Vorentladung, die eine niederohmige Überbrückung über einen Isolator 16 ausbildet, mittels einer elektrischen Vorentladungsquelle erzeugt werden. Beispielsweise kann eine erste Hilfselektrode 214 und eine zweiten Hilfselektrode 212, die die durch den Isolator 16 voneinander getrennt sind und koaxial zueinander angeordnet sind, mittels einer elektrischen Vorentladungsquelle verbunden werden. Gemäß optionalem Block 320 kann eine Vorentladung zwischen der ersten Hilfselektrode 214 und der zweiten Hilfselektrode 212 durch eine Vorentladung eines elektrischen Vorentladungs-Stromes über die erste Hilfselektrode 214 und die zweite Hilfselektrode 212 ausgebildet werden. Insbesondere kann die Vorentladung unter Verwendung der elektrischen Vorentladungsquelle erzeugt werden. Gemäß Block 330 kann eine Anode 14 und eine Kathode 12, die durch einen Isolator 16 voneinander getrennt sind und koaxial zueinander angeordnet sind, mittels einer elektrischen Entladungsquelle verbunden werden. Gemäß Block 340 kann eine Plasmaschicht aus einem Gas mit einem magnetischen Feld durch eine Entladung eines elektrischen Strompulses über die Anode 14 und die Kathode 12 ausgebildet werden. Insbesondere kann die Entladung oder Hauptstromentladung unter Verwendung der elektrischen Entladungsquelle erzeugt werden. Beispielsweise kann die Entladung innerhalb von 1 µs oder mehr nach der Vorentladung erfolgen. Gemäß Block 350 kann ein Plasmoid vor der Anode 14 als Ergebnis des magnetischen Felds ausgebildet werden. Gemäß Block 360 kann, aus dem Plasmoid, ein oder mehrere Partikelstrahlen, ein oder mehrere Röntgenstrahlen oder Kombinationen daraus, emittiert werden. Insbesondere kann die Emission ein Ergebnis eines Zerfalls des magnetischen Felds des Plasmoids und der Kollision von Elektronen und Ionen in dem Plasmoid sein.

Während das Vorherige auf Ausführungsformen der Offenbarung Bezug nehmen, können andere und weiter Ausführungsformen der Offenbarung abgeleitet werden, ohne vom Schutzumfang der Offenbarung abzuweichen. Es ist beabsichtigt, dass die Offenbarung solche Modifizierungen und Weiterbildungen einschließt. Der Schutzumfang wird von den anhängenden Ansprüchen bestimmt.

## Patentansprüche

1. Vorrichtung (10) zum Erzeugen von Röntgenstrahlung und Partikelstrahlung für einen Kernfusionsreaktor, umfassend:
- eine Reaktorkammer;
- eine Anode (14), eine Kathode (12) und einen Isolator (16), wobei die Anode (14) und die Kathode (12) durch einen Isolator (16) voneinander getrennt sind und koaxial zueinander angeordnet sind, wobei die Anode (14), die Kathode (12) und der Isolator (16) zumindest teilweise in der Reaktorkammer angeordnet sind;
- eine Vorentladungseinrichtung zum Erzeugen einer filamentierten Vorentladung, die eine niederohmige Überbrückung über den Isolator (16) ausbildet;
- ein Gas, das in der Reaktorkammer enthalten ist;
- eine elektrische Vorentladungsquelle (200), insbesondere mit hohen Innenwiderstand, die mit der Vorentladungseinrichtung verbunden ist; und
- eine elektrische Entladungsquelle (15), die mit der Anode (14) und der Kathode (12) elektrisch verbunden ist, wobei die elektrische Entladungsquelle (15) konfiguriert ist, um im Betrieb als Ergebnis einer elektrischen Entladung von der elektrischen Entladungsquelle (15) ein dichtes, magnetisch eingeschlossenes Plasmoid vor der Anode (14) erzeugt wird und einen oder mehrere Ionenstrahlen, einen oder mehrere Röntgenstrahlen oder Kombinationen daraus emittiert,
wobei die Vorentladungseinrichtung eine erste Hilfselektrode (214) und eine zweite Hilfselektrode (212) umfasst, die durch den Isolator (16) voneinander getrennt sind und achsparallel zueinander angeordnet sind, wobei die Vorentladungsquelle (200) elektrisch mit der ersten Hilfselektrode (214) und der zweiten Hilfselektrode (212) verbunden ist, wobei die erste Hilfselektrode (214) und die zweite Hilfselektrode (212) teilweise in der Reaktorkammer angeordnet sind, die erste Hilfselektrode (214) eine Mehrzahl von ersten Hilfselektroden-Elektroden (214) aufweist und die zweite Hilfselektrode (212) eine Mehrzahl von zweiten Hilfselektroden-Elektroden (212) aufweist, und wobei die erste Hilfselektrode (214) und die zweite Hilfselektrode (212) so konfiguriert sind, dass sie als Ergebnis einer elektrischen Vorentladung der elektrischen Vorentladungsquelle eine filamentierte Vorentladung, zwischen den ersten Hilfselektroden-Elektroden (214) und den zweite Hilfselektrode-Elektroden (212) ausbilden.

2. Vorrichtung nach Anspruch 1, wobei die filamentierte Vorentladung eine filamentierte Glimmentladung ist.

3. Vorrichtung nach Anspruch 1, wobei die erste Hilfselektrode (214) eine Hilfsanode, und die zweite Hilfselektrode (212) eine Hilfskathode sind, oder wobei die erste Hilfselektrode (214) eine Hilfskathode, und die zweite Hilfselektrode (212) eine Hilfsanode sind.

4. Vorrichtung nach einem der Ansprüche 1 bis 3, wobei die Kathode (12) eine Mehrzahl von Kathoden-Elektroden (12) aufweist.

5. Vorrichtung nach Anspruch 4, wobei die Kathode (12) eine leitfähige Scheibe aufweist und die Mehrzahl von Kathoden-Elektroden (12) auf der Scheibe befestigt sind.

6. Vorrichtung nach Anspruch 2 und 4, wobei eine Anzahl der Mehrzahl von Kathoden-Elektroden (12) einer Anzahl der Mehrzahl von ersten Hilfselektroden-Elektroden (214) und/oder einer Anzahl der Mehrzahl von zweiten Hilfselektroden-Elektroden (212) entspricht.

7. Vorrichtung nach einem der Ansprüche 3 bis 6, wobei die Kathode (12) und die Hilfskathode (212) miteinander elektrisch verbunden, insbesondere kurzgeschlossen, sind.

8. Vorrichtung nach einem der Ansprüche 2 bis 7, wobei der Isolator (16) die ersten Hilfselektroden-Elektroden (214) zumindest teilweise umschließt, insbesondere wobei die ersten Hilfselektroden-Elektroden (214) im Isolator (16) verlaufen, voneinander getrennt sind und/oder koaxial zur Anode (14) angeordnet sind.

9. Vorrichtung nach einem der Ansprüche 2 bis 8, wobei die elektrische Vorentladungsquelle konfiguriert ist, um eine elektrische Vorentladung von gleich oder größer als 0,5 kV, insbesondere gleich oder größer als 1 kV, vorzugsweise gleich oder größer als 2 kV mittels einer Mehrzahl von Vorwiderständen zu erzeugen.

10. Kernfusionsreaktor mit einer Vorrichtung (10) zum Erzeugen von Röntgenstrahlung und Partikelstrahlung nach einem der Ansprüche 1 bis 9.

11. Verfahren zum Erzeugen von Röntgenstrahlung und Partikelstrahlung für einen Kernfusionsreaktor mit einer Vorrichtung nach einem der Ansprüche 1 bis 9, umfassend:
- Erzeugen der filamentierten Vorentladung, die eine niederohmige Überbrückung über einen Isolator (16) ausbildet, mittels der elektrischen Vorentladungsquelle (200);
- Verbinden der Anode (14) und der Kathode (12), die durch den Isolator (16) voneinander getrennt sind und koaxial zueinander angeordnet sind, mittels der elektrischen Entladungsquelle (15);
- Ausbilden eines Plasmakanals aus einem Gas mit einem magnetischen Feld durch eine Entladung eines elektrischen Strompulses über die Anode (14) und die Kathode (12);
- Ausbilden eines Plasmoids vor der Anode (14) als Ergebnis des magnetischen Felds; und
- Emittieren, aus dem Plasmoid, von einem oder mehreren Partikelstrahlen, einem oder mehreren Röntgenstrahlen oder Kombinationen daraus, wobei die Emission ein Ergebnis eines Zerfalls des magnetischen Felds des Plasmoids und der Kollision von Elektronen und Ionen in dem Plasmoid ist.

12. Verfahren nach Anspruch 11, wobei die Entladung innerhalb von 1 µs oder mehr nach der Vorentladung erfolgt.

## Claims

1. Apparatus (10) for generating X-rays and particle radiation for a nuclear fusion reactor, comprising:
- a reactor chamber;
- an anode (14), a cathode (12) and an insulator (16), wherein the anode (14) and the cathode (12) are separated from each other by an insulator (16) and are arranged coaxially with each other, wherein the anode (14), the cathode (12) and the insulator (16) being at least partially arranged in the reactor chamber;
- a pre-discharge device for generating a filamentary pre-discharge which forms a low-resistance bridge across the insulator (16);
- a gas contained in the reactor chamber;
- an electrical pre-discharge source (200), in particular with high internal resistance, which is connected to the pre-discharge device; and
- an electrical discharge source (15) electrically connected to the anode (14) and the cathode (12), wherein the electrical discharge source (15) is configured to generate, during operation, as a result of an electrical discharge from the electrical discharge source (15), a dense, magnetically confined plasmoid in front of the anode (14) and emitting one or more ion beams, one or more X-rays, or combinations thereof,
wherein the pre-discharge device comprises a first auxiliary electrode (214) and a second auxiliary electrode (212) separated from each other by the insulator (16) and arranged axially parallel to each other,
wherein the pre-discharge source (200) is electrically connected to the first auxiliary electrode (214) and the second auxiliary electrode (212),
wherein the first auxiliary electrode (214) and the second auxiliary electrode (212) are partially arranged in the reactor chamber, the first auxiliary electrode (214) comprising a plurality of first auxiliary electrode-electrodes (214) and the second auxiliary electrode (212) comprising a plurality of second auxiliary electrode-electrodes (212), and wherein the first auxiliary electrode (214) and the second auxiliary electrode (212) are configured to form, as a result of an electrical pre-discharge of the electrical pre-discharge source, a filamentary pre-discharge between the first auxiliary electrode-electrodes (214) and the second auxiliary electrode-electrodes (212).

2. Apparatus according to claim 1, wherein the filamented pre-discharge is a filamented glow discharge.

3. Apparatus according to claim 1, wherein the first auxiliary electrode (214) is an auxiliary anode and the second auxiliary electrode (212) is an auxiliary cathode, or wherein the first auxiliary electrode (214) is an auxiliary cathode and the second auxiliary electrode (212) is an auxiliary anode.

4. Apparatus according to any one of claims 1 to 3, wherein the cathode (12) comprises a plurality of cathode electrodes (12).

5. Apparatus according to claim 4, wherein the cathode (12) comprises a conductive disc and the plurality of cathode electrodes (12) are fixed to the disc.

6. Apparatus according to claims 2 and 4, wherein a number of the plurality of cathode electrodes (12) corresponds to a number of the plurality of first auxiliary electrode-electrodes (214) and/or a number of the plurality of second auxiliary electrode-electrodes (212).

7. Apparatus according to any one of claims 3 to 6, wherein the cathode (12) and the auxiliary cathode (212) are electrically connected to each other, in particular short-circuited.

8. Apparatus according to any one of claims 2 to 7, wherein the insulator (16) at least partially surrounds the first auxiliary electrode-electrodes (214), in particular wherein the first auxiliary electrode-electrodes (214) extend in the insulator (16), are separated from one another and/or are arranged coaxially with the anode (14).

9. Apparatus according to any one of claims 2 to 8, wherein the electrical pre-discharge source is configured to generate an electrical pre-discharge of equal to or greater than 0.5 kV, in particular equal to or greater than 1 kV, preferably equal to or greater than 2 kV by means of a plurality of series resistors.

10. Nuclear fusion reactor with a device (10) for generating X-rays and particle radiation according to one of claims 1 to 9.

11. Method for generating X-rays and particle radiation for a nuclear fusion reactor with a device according to any one of claims 1 to 9, comprising:
- generating the filamented pre-discharge, which forms a low-resistance bridge across an insulator (16), by means of the electrical pre-discharge source (200);
- connecting the anode (14) and the cathode (12), which are separated from each other by the insulator (16) and arranged coaxially with each other, by means of the electrical discharge source (15);
- forming a plasma channel from a gas with a magnetic field by discharging an electrical current pulse across the anode (14) and the cathode (12);
- forming a plasmoid in front of the anode (14) as a result of the magnetic field; and
- emitting, from the plasmoid, one or more particle beams, one or more X-rays, or combinations thereof, wherein the emission is a result of a decay of the magnetic field of the plasmoid and the collision of electrons and ions in the plasmoid.

12. Method according to claim 11, wherein the discharge occurs within 1 µs or more after the pre-discharge.

## Revendications

1. Dispositif (10) pour la génération de rayonnement X et de rayonnement particulaire pour un réacteur de fusion nucléaire, comprenant :
- une chambre de réacteur ;
- une anode (14), une cathode (12) et un isolateur (16), dans lequel l'anode (14) et la cathode (12) sont séparées l'une de l'autre par un isolateur (16) et sont disposées coaxialement l'une par rapport à l'autre, dans lequel l'anode (14), la cathode (12) et l'isolateur (16) sont disposés au moins partiellement dans la chambre de réacteur ;
- un équipement de prédécharge pour générer une prédécharge filamentée qui réalise un pontage à basse impédance au-dessus de l'isolateur (16) ;
- un gaz, qui est contenu dans la chambre de réacteur ;
- une source de prédécharge électrique (200), en particulier à haute résistance interne, qui est reliée au dispositif de prédécharge ; et
- une source de décharge électrique (15), qui est reliée électriquement à l'anode (14) et à la cathode (12), dans lequel la source de décharge électrique (15) est configurée pour qu'en fonctionnement, en conséquence d'une décharge électrique provenant de la source de décharge électrique (15), un plasmoïde dense, magnétiquement enfermé, soit généré devant l'anode (14) et émette un ou plusieurs faisceaux ioniques, un ou plusieurs faisceaux de rayons X ou des combinaisons de ceux-ci,
dans lequel le dispositif de prédécharge comprend une première électrode auxiliaire (214) et une deuxième électrode auxiliaire (212) qui sont séparées l'une de l'autre par l'isolateur (16) et sont disposées en parallélisme axial l'une par rapport à l'autre, dans lequel la source de prédécharge (200) est reliée électriquement à la première électrode auxiliaire (214) et à la deuxième électrode auxiliaire (212), dans lequel la première électrode auxiliaire (214) et la deuxième électrode auxiliaire (212) sont disposées partiellement dans la chambre de réacteur, la première électrode auxiliaire (214) présente une pluralité d'électrodes de première électrode auxiliaire (214) et la deuxième électrode auxiliaire (212) présente une pluralité d'électrodes de deuxième électrode auxiliaire (212), et dans lequel la première électrode auxiliaire (214) et la deuxième électrode auxiliaire (212) sont configurées de telle sorte qu'elles réalisent en conséquence d'une prédécharge électrique de la source de prédécharge électrique une prédécharge filamentée entre les électrodes de première électrode auxiliaire (214) et les électrodes de deuxième électrode auxiliaire (212).

2. Dispositif selon la revendication 1, dans lequel la prédécharge filamentée est une décharge luminescente filamentée.

3. Dispositif selon la revendication 1, dans lequel la première électrode auxiliaire (214) est une anode auxiliaire et la deuxième électrode auxiliaire (212) est une cathode auxiliaire, ou dans lequel la première électrode auxiliaire (214) est une cathode auxiliaire et la deuxième électrode auxiliaire (212) est une anode auxiliaire.

4. Dispositif selon l'une des revendications 1 à 3, dans lequel la cathode (12) présente une pluralité d'électrodes cathodes (12).

5. Dispositif selon la revendication 4, dans lequel la cathode (12) présente un disque conducteur et la pluralité d'électrodes cathodes (12) est fixée sur le disque.

6. Dispositif selon les revendications 2 et 4, dans lequel un nombre de la pluralité d'électrodes cathodes (12) correspond à un nombre de la pluralité d'électrodes de première électrode auxiliaire (214) et/ou à un nombre de la pluralité d'électrodes de deuxième électrode auxiliaire (212).

7. Dispositif selon l'une des revendications 3 à 6, dans lequel la cathode (12) et la cathode auxiliaire (212) sont reliées électriquement entre elles, en particulier court-circuitées.

8. Dispositif selon l'une des revendications 2 à 7, dans lequel l'isolateur (16) entoure au moins partiellement les électrodes de première électrode auxiliaire (214), en particulier dans lequel les électrodes de première électrode auxiliaire (214) passent dans l'isolateur (16), sont séparées les unes des autres et/ou sont disposées coaxialement par rapport à l'anode (14).

9. Dispositif selon l'une des revendications 2 à 8, dans lequel la source de prédécharge électrique est configurée pour générer une prédécharge électrique égale ou supérieure à 0,5 kV, en particulier égale ou supérieure à 1 kV, de préférence égale ou supérieure à 2 kV au moyen d'une pluralité de prérésistances.

10. Réacteur de fusion nucléaire comprenant un dispositif (10) de génération de rayonnement X et de rayonnement particulaire selon l'une des revendications 1 à 9.

11. Procédé de génération de rayonnement X et de rayonnement particulaire pour un réacteur de fusion nucléaire avec un dispositif selon l'une des revendications1 à 9, comprenant :
- générer la prédécharge filamentée qui réalise un pontage basse impédance via un isolateur (16) au moyen de la source de prédécharge électrique (200) ;
- lier l'anode (14) et de la cathode (12), qui sont séparées l'une de l'autre par l'isolateur (16) et sont disposées coaxialement l'une par rapport à l'autre, au moyen de la source de décharge électrique (15) ;
- réaliser un canal à plasma à partir d'un gaz avec un champ magnétique par une décharge d'une impulsion de courant électrique via l'anode (14) et la cathode (12) ;
- réaliser un plasmoïde devant l'anode (14) en conséquence du champ magnétique ; et
- émettre, à partir du plasmoïde, un ou plusieurs faisceaux de particules, d'un ou plusieurs faisceaux de rayons X ou de combinaisons de ceux-ci, dans lequel l'émission est le résultat d'une dégradation du champ magnétique du plasmoïde et de la collision d'électrons et d'ions dans le plasmoïde.

12. Procédé selon la revendication 11, dans lequel la décharge est effectuée dans un délai de 1 µs ou plus après la prédécharge.
